# FASCICULE DE BREVET EUROPEEN

(11) **EP 1 949 956 B1**
(45) Date de publication et mention de la délivrance du brevet: **11.01.2017**
(21) Numéro de dépôt: 08356014.4
(22) Date de dépôt: 23.01.2008
(51) Int. Cl.: B01J 8/10, B01J 19/20, B01D 53/50, B01D 53/68

(54) **Procédé et installation d'épuration de fumées contenant des polluants acides**
Verfahren und Anlage zur Klärung von Dämpfen, die saure Schadstoffe enthalten
Method and installation for purification of fumes containing acid pollutants

(30) Priorité: 24.01.2007 FR 0700486
(43) Date de publication de la demande: 30.07.2008
(73) Titulaire: LAB SA, 69007 Lyon (FR)
(72) Inventeur: Woillez, Jacques, 69006 Lyon (FR); Tabaries, Frank, 83190 Ollioules (FR); Siret, Bernard, 69200 Venissieux (FR)
(74) Mandataire: Lavoix

(56) Documents cités:
- WO-A-02/087755
- GB-A- 292 642
- US-A- 2 600 871

## Description

La présente invention concerne un procédé et une installation d'épuration de fumées contenant des polluants acides.

De nombreuses activités industrielles génèrent des oxydes de soufre ainsi que d'autres gaz polluants acides qu'il faut traiter.

On peut citer les incinérateurs, les fours cimentiers ou les raffineries de pétrole. Pour traiter ces gaz acides, au rang desquels on trouve principalement le dioxyde de soufre SO₂ et l'acide chlorhydrique HCl, plusieurs procédés sont connus et d'utilisation commerciale courante.

Tout d'abord, on trouve les procédés humides dans lesquels les gaz à épurer sont mis en contact avec un liquide de lavage qui, par absorption, capte les polluants acides et les neutralise. Plusieurs technologies sont disponibles depuis les laveurs utilisant une pulvérisation en pluie jusqu'aux laveurs à garnissage, en passant par les laveurs à plateaux.

Si ces procédés sont extrêmement efficaces et produisent comparativement peu de résidus solides, ils sont plutôt coûteux en termes d'investissement.

On trouve ensuite les procédés secs dans lesquels un réactif de neutralisation, usuellement la chaux ou le bicarbonate de sodium est injecté dans le gaz à épurer, et dans lesquels le produit de la réaction ainsi que l'excès de réactifs est collecté dans un filtre à manche ou dans un électrofiltre. Ces procédés, moins lourds en investissement, souffrent de coûts opératoires sensiblement plus élevés que ceux des procédés humides car un excès de réactifs est nécessaire à une épuration poussée, ce qui se traduit par davantage de coûts pour ce réactif et surtout pour le traitement et la mise en décharge des résidus solides.

On a cherché à améliorer cette situation avec les procédés semi-secs dans lesquels le réactif est mis en contact avec les gaz à épurer non pas sous forme solide, mais sous forme d'un liquide ou d'une bouillie, usuellement un lait de chaux. Au contact des gaz chauds l'eau s'évapore, laissant au final un résidu solide d'une composition similaire à celui des procédés secs, qui est collecté sur un filtre ou un électrofiltre. Cette situation représente un progrès par rapport aux systèmes secs car l'existence temporaire d'une phase humide permet de réduire l'excès nécessaire de réactif. La quantité consommée de réactifs est moindre, tout comme la quantité de résidus produits. Ce progrès implique cependant une complexité plus grande puisqu'un réacteur d'atomisation / évaporation est indispensable.

On a également cherché à diminuer la quantité de réactifs et de résidus produits dans les systèmes secs en humidifiant au préalable le réactif par exemple en pulvérisant de l'eau sur la chaux dans une vis ou un tambour avant de le mettre en contact avec les gaz chauds. On réalise donc à moindres frais une sorte de procédé semi-sec qui tire parti de l'humidification en surface du réactif. Par certains aspects on a réalisé une activation du réactif.

On peut également chercher à réactiver le réactif par adjonction d'eau, ou par exposition à de la vapeur, comme cela est décrit dans FR-A-2 883 772, qui décrit l'ensemble des caractéristiques du préambule de la revendication 1 annexée. Toutefois la mise en oeuvre d'un contacteur, tel un lit fluidisé, pose des problèmes et est assez onéreuse en termes d'investissement. Dans un autre domaine, si les résidus sont trop chargés en humidité, ce qui peut être le cas quand les fumées sont elles-mêmes très riches en vapeur d'eau, ces résidus sont sujets au mottage. Ils sont alors difficiles à transporter et peuvent causer des blocages ou des bourrages.

Ceci étant précisé, l'invention vise à mettre en oeuvre un procédé d'épuration de fumées contenant des polluants acides, du type de celui décrit dans FR-A-2 883 772, dans lequel le conditionnement des solides est assuré de manière à la fois efficace, simple et économique.

A cet effet, elle a pour objet un procédé d'épuration de fumées selon la revendication 1 annexée.

Des caractéristiques avantageuses de l'invention font l'objet des revendications 2 à 6.

L'invention a également pour objet une installation d'épuration de fumées selon la revendication 7.

Des caractéristiques avantageuses de l'invention font l'objet des revendications 8 et 9.

L'invention va être décrite ci-après, en référence aux dessins annexés, donnés uniquement à titre d'exemple non limitatif, dans lesquels :

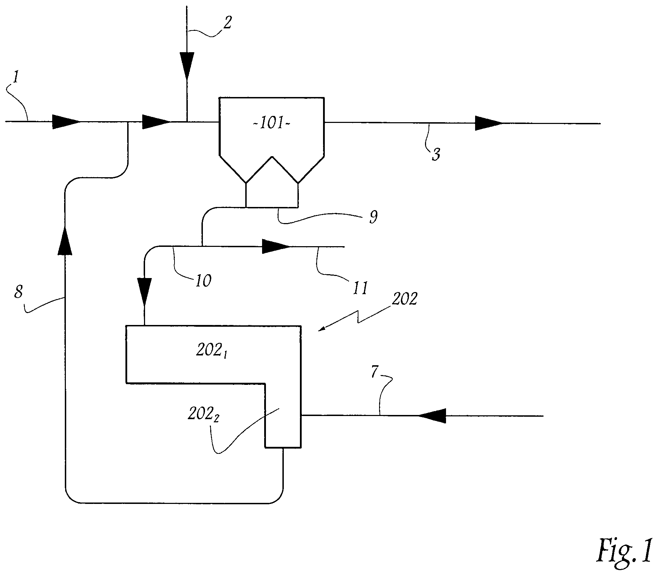

- la figure 1 est une vue schématique d'une installation d'épuration de fumées conforme à l'invention ; et
- la figure 2 est une vue de côté, illustrant de façon plus précise un dispositif de conditionnement de solides appartenant à cette installation d'épuration de fumées.

L'installation d'épuration de fumées conforme à l'invention comprend un dispositif d'épuration gaz-solides 101, d'une technologie connue en soi. Ce dispositif, qui est par exemple de type filtre à manches, reçoit des fumées à épurer 1 à une température comprise entre 110 et 230°C, et de préférence entre 130 et 180°C. Il reçoit en outre un apport de réactif frais 2 pouvant être de la chaux, une chaux à grande surface spécifique ou une chaux magnésienne, ainsi qu'un solide recirculé 8, provenant d'un réacteur de conditionnement 202.

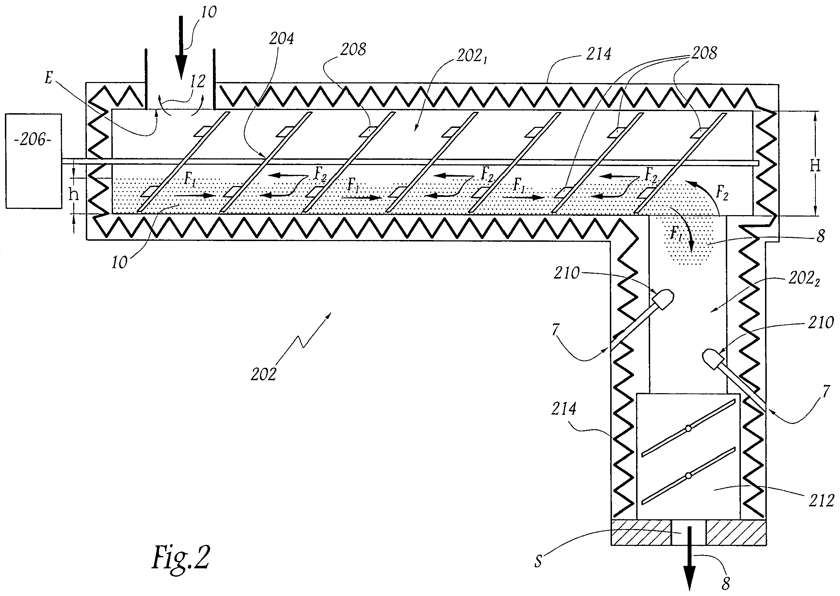

Une partie 10 des résidus 9 issus du séparateur 101, alimentée à un débit contrôlé, par exemple par un système de vis/sas non représenté, est dirigée vers le réacteur 202. Cette partie 10 de solides à conditionner, qui représente entre 40 et 95% de la totalité du flux 9, évacué en aval du séparateur 101, est admise à l'entrée du réacteur de conditionnement 202, illustré plus particulièrement sur la figure 2.

En référence à cette figure 2, ce réacteur de conditionnement comprend tout d'abord une entrée E d'introduction des solides, qui débouche dans une zone de convoyage 202₁, sensiblement horizontale, dans laquelle est prévue une vis sans fin 204, ou analogue. Cette dernière est couplée à un moteur 206, de type connu en soi, dont on peut faire varier la vitesse, par exemple à l'aide d'un variateur.

De façon avantageuse, la vis sans fin est en outre pourvue de moyens de brassage des solides, réalisés par exemple sous forme de pâles 208 ou analogues. Dans sa partie aval, la zone de convoyage 202₁ débouche dans une chambre 202₂, s'étendant de manière globalement verticale.

Cette chambre 202₂ est pourvue de moyens d'admission d'un gaz de conditionnement, qui sont par exemple des buses 210, ou encore de simples tuyaux coupés. En aval de la chambre, c'est-à-dire au-dessous de celle-ci, il est prévu un dispositif d'évacuation 212, qui est par exemple un sas rotatif ou encore un sas à double clapet, de type connu en soi. Ce dispositif d'évacuation 212 débouche dans une sortie S du réacteur 202, à partir de laquelle les solides conditionnés peuvent être renvoyés vers l'entrée du séparateur 101.

Enfin, l'ensemble du réacteur 202 est calorifugé et tracé grâce à une enveloppe externe 214, permettant de contrôler la température des solides présents dans le réacteur.

En service, les solides à conditionner 10 sont admis dans la zone de convoyage 202₁, puis y circulent sous l'effet de la vis sans fin 204, selon les flèches F₁. Dans le même temps, on admet un gaz de conditionnement 7 dans la chambre 202₂, qui circule ensuite dans la zone de convoyage 202₁, à contre-courant des solides 10, à savoir selon les flèches F₂. Ce gaz de conditionnement peut être, soit de l'air sec, soit un mélange d'air et de vapeur d'eau en toutes proportions appropriées.

On règle les différents paramètres constructifs et opératoires, à savoir notamment les dimensions de la vis sans fin ainsi que le débit de solides, afin que le temps de passage de ces solides 10 soit compris entre 30 secondes et 8 minutes, de préférence entre 1 minute et 5 minutes. Ce temps de passage peut être défini comme la durée moyenne pendant laquelle une fraction de solide considérée est en contact avec le gaz de conditionnement, durant son trajet dans le réacteur 202.

Il est avantageux que le diamètre de la vis sans fin 204 soit adapté pour permettre, d'une part, un temps de contact suffisant entre les solides et le gaz et, d'autre part, un brassage efficace de ces solides. A cet égard, on notera que la présence éventuelle des pâles 208 est avantageuse en vue de ce brassage. Il est également avantageux que le volume intérieur de la zone de convoyage 202₁ ne soit pas entièrement rempli de solides.

Dans ces conditions, la hauteur h de ces solides représente avantageusement entre 20 et 70% de la hauteur totale H de la zone de convoyage, de préférence entre 35 et 55%. A titre d'exemple non limitatif, pour un flux de solides de 4000 kg/hr à traiter, une vis d'une longueur de 2 à 3 mètres et d'un diamètre de 400 à 700 mm, pour laquelle les solides occupent de 35 à 55% du diamètre, est bien adaptée.

Le débit de gaz de conditionnement 7 est choisi dans la plage de 1 à 60 kg/hr, et de préférence entre 2 et 10 kg/hr. Grâce à la présence de l'enveloppe externe 214, on contrôle la température des solides présents dans le réacteur, à une valeur avantageusement comprise entre 50 et 200°C, de préférence entre 80 et 150°C.

Ainsi, les solides admis dans le réacteur 202 sont conditionnés, grâce au passage à contre-courant du gaz de conditionnement 7. Après son passage dans le réacteur, le gaz effluent 12 est évacué vers l'extérieur, ou bien encore renvoyé de façon directe ou indirecte vers le séparateur 101. Il est également à noter que, en fonction des solides à traiter, il est possible de modifier de manière appropriée la nature de ce gaz de conditionnement.

Ainsi, il est connu de l'art antérieur que l'humidification accroît l'activité apparente du solide, en tant que réactif. Il est également connu que les ions chlorure et le chlorure de calcium augmentent l'activité apparente de la chaux, en particulier pour le dioxyde de soufre. Les réactions d'équilibrage comme CaCl₂ + Ca(OH)₂ □ 2 Ca OH Cl sont favorisées par la présence d'eau. Inversement, dans certaines circonstances les solides recirculés peuvent subir un mottage et doivent par conséquent être partiellement asséchés pour éviter des problèmes de bourrage, ou pour pouvoir assurer un débit régulier de solides recirculés. La présente invention propose ainsi un réacteur permettant d'ajuster l'humidité des réactifs recirculés de façon à optimiser la réactivité de ces solides tout en assurant des caractéristiques de transport satisfaisantes.

Comme il ressort de ce qui précède, l'invention assure un avantage économique substantiel, par rapport à la solution antérieure décrite dans FR-A-2 883 772, qui fait appel à un réacteur d'activation séparé. En effet, l'invention intègre ce réacteur au sein du volume de convoyage des solides à traiter. Par conséquent, les investissements correspondants sont notablement réduits, ainsi que les coûts opératoires.

## Revendications

1. Procédé d'épuration de fumées (1) contenant des polluants acides, qui comprennent l'acide chlorhydrique et/ou le dioxyde de soufre, dans lequel on alimente les fumées à épurer (1), à une température comprise entre 110°C et 230°C, de préférence entre 130°C et 180°C, à un séparateur gaz-solides (101), auquel on alimente également un réactif de neutralisation (2), notamment de la chaux, de la magnésie, du carbonate de sodium ou du bicarbonate de sodium, on extrait une fraction (10), comprise entre 40 et 95%, des résidus solides (9) issus du séparateur gaz-solides (101), on conditionne cette fraction (10) de résidus solides, et on renvoie au moins une partie des solides ainsi conditionnés (8) vers le séparateur gaz-solides (101), **caractérisé en ce que** le conditionnement de la fraction de résidus solides comprend les étapes suivantes :
- on introduit les solides à conditionner (10) dans un réacteur (202) comprenant une vis sans fin (204),
- on admet, à un débit compris entre 1 et 60 kg/hr, un gaz de conditionnement (7) au sein du réacteur, et on fait circuler ce gaz de conditionnement dans le réacteur à contre-courant des solides à conditionner (10),
- on maintient les solides à une température comprise entre 50 et 200°C, de préférence entre 80 et 150°C, à l'intérieur du réacteur (202),
- on règle le débit de solides et les dimensions de la vis sans fin, afin que le temps de passage des solides, au contact du gaz de conditionnement, soit compris entre 30 secondes et 8 minutes, de préférence entre 1 et 5 minutes, et
- on extrait les solides ainsi conditionnés (8), de façon à les renvoyer vers le séparateur (101).

2. Procédé selon la revendication 1, **caractérisé en ce qu'**on introduit les solides à conditionner (10) dans une entrée (E) prévue à une première extrémité du réacteur, alors qu'on admet le gaz de conditionnement (7) dans une chambre d'admission (202₂), prévue au voisinage de l'extrémité opposée du réacteur.

3. Procédé selon la revendication 2, **caractérisé en ce qu'**on injecte le gaz de conditionnement (7) dans la chambre d'admission par l'intermédiaire de buses (210).

4. Procédé selon l'une quelconque des revendications précédentes, **caractérisé en ce que** le gaz de conditionnement (7) est de l'air sec, ou bien un mélange d'air et de vapeur d'eau.

5. Procédé selon l'une quelconque des revendications 2 à 4, **caractérisé en ce qu'**on extrait les solides conditionnés (8) hors de la chambre d'admission par l'intermédiaire d'un dispositif d'évacuation (212), notamment d'un sas rotatif, d'une écluse ou d'un sas à double clapet.

6. Procédé selon l'une quelconque des revendications précédentes, **caractérisé en ce qu'**on maintient la hauteur (h) de solides à un niveau compris entre 20 et 70%, de préférence entre 40 et 55%, de la hauteur (H) de la vis sans fin.

7. Installation d'épuration de fumées pour la mise en oeuvre du procédé conforme à l'une quelconque des revendications précédentes, comprenant :
- des moyens d'alimentation des fumées à épurer (1) ;
- un séparateur gaz-solide (101), dans lequel débouchent les moyens d'alimentation en fumées à épurer ;
- des moyens (2) d'admission d'un réactif de neutralisation, débouchant dans le séparateur (101) ;
- ainsi qu'un dispositif de conditionnement des résidus solides issus de ce séparateur,
**caractérisée en ce que** ce dispositif de conditionnement comprend un réacteur (202), une vis sans fin (204) logée dans ce réacteur, une entrée (E) des solides à conditionner, des moyens (210) d'admission d'un gaz de conditionnement, à contre-courant de la circulation des solides, et une sortie (S) d'évacuation des solides conditionnés.

8. Installation selon la revendication 7, **caractérisée en ce que** le dispositif de conditionnement comprend une zone de convoyage (202₁) sensiblement horizontale, dans laquelle est reçue la vis sans fin (204), ainsi qu'une chambre (202₂) d'admission du gaz de conditionnement, sensiblement verticale.

9. Installation selon la revendication 7 ou 8, **caractérisée en ce qu'**il est prévu des moyens (208) de brassage des solides (10), en particulier des pâles (208) équipant la vis sans fin (204).

## Patentansprüche

1. Verfahren zur Reinigung von Rauchgasen (1), die Salzsäure und/oder Schwefeldioxid umfassende saure Schadstoffe enthalten, bei dem die zu reinigenden Rauchgase (1) bei einer Temperatur zwischen 110°C und 230°C, vorzugsweise zwischen 130°C und 180°C in einen Gas-Feststoff-Abscheider (101) zugefügt werden, dem gleichfalls ein Neutralisierungsreagenz (2), insbesondere Kalk, Magnesium, Natriumkarbonat oder Natriumbikarbonat, geliefert wird, eine Fraktion (10) zwischen 40 und 95% von aus dem Gas-Feststoff-Abscheider (101) stammenden Restfeststoffen (9) extrahiert wird, diese Fraktion (10) an Feststoffen konditioniert wird und mindestens ein Teil dieser so konditionierten Feststoffe (8) in den Gas-Feststoff-Abscheider (101) zurückgeführt wird, **dadurch gekennzeichnet, dass** die Konditionierung der Fraktion an Restfeststoffen die folgenden Schritte umfasst:
- die zu konditionierenden Feststoffe (10) werden in den Reaktor (202), der eine Förderschnecke (204) umfasst, eingeführt,
- ein Konditioniergas (7) mit einer Durchflussrate zwischen 1 und 60 kg/h wird in den Reaktor eingelassen und dieses Konditioniergas wird in dem Reaktor im Gegenstrom zu den zu konditionierenden Feststoffen (10) zirkuliert,
- die Feststoffe werden bei einer Temperatur zwischen 50 und 200°C, vorzugsweise zwischen 80 und 150°C im Inneren des Reaktors (202) gehalten,
- die Durchflussrate und die Abmessungen der Förderschnecke werden so eingestellt, dass die Durchlaufzeit der Feststoffe im Kontakt mit dem Konditioniergas zwischen 30 Sekunden und 8 Minuten, vorzugweise zwischen 1 und 5 Minuten liegt, und
- die so konditionierten Feststoffe (8) werden extrahiert, um sie zu dem Abscheider (101) zurückzuleiten.

2. Verfahren nach Anspruch 1, **dadurch gekennzeichnet, dass** die zu konditionierenden Feststoffe (10) in einen an einem ersten Ende des Reaktors vorgesehenen Einlass (E) eingeführt werden, während das Konditioniergas (7) in eine Einlasskammer (202₂) zugegeben wird, die in der Nähe des entgegengesetzten Endes des Reaktors vorgesehen ist.

3. Verfahren nach Anspruch 2, **dadurch gekennzeichnet, dass** das Konditioniergas (7) in die Einlasskammer über Düsen (210) injiziert wird.

4. Verfahren nach einem beliebigen der vorhergehenden Ansprüche, **dadurch gekennzeichnet, dass** das Konditioniergas (7) trockene Luft oder auch eine Mischung aus Luft und Wasserdampf ist.

5. Verfahren nach einem beliebigen der Ansprüche 2 bis 4, **dadurch gekennzeichnet, dass** die konditionierten Feststoffe (8) aus der Einlasskammer über eine Auslassvorrichtung (212), insbesondere einen Schleusenrotor, eine Schleuse oder eine Doppelklappenschleuse extrahiert werden.

6. Verfahren nach einem beliebigen der vorhergehenden Ansprüche, **dadurch gekennzeichnet, dass** die Höhe (h) der Feststoffe bei einem Niveau zwischen 20 und 70%, vorzugsweise zwischen 40 und 55% der Höhe (H) der Förderschnecke gehalten wird.

7. Reinigungsanlage für Rauchgase zur Durchführung des Verfahren nach einem beliebigen der vorhergehenden Ansprüche, umfassend:
- Mittel zum Zuführen der zu reinigenden Rauchgase (1);
- einen Gas-Feststoff-Abscheider (101), in den die Mittel zum Zuführen der zu reinigenden Rauchgase münden;
- Mittel (2) zum Liefern eines Neutralisationsreagenz, die in den Abscheider (101) münden;
- sowie eine Konditioniervorrichtung für die Feststoffe, die aus diesem Abscheider stammen,
**dadurch gekennzeichnet, dass** diese Konditioniervorrichtung einen Reaktor (202), eine in diesem Reaktor aufgenommene Förderschnecke (204), einen Einlass (E) für die zu konditionierenden Feststoffe, Mittel (210) zum Einlassen eines Konditioniergases im Gegenstrom zu der Zirkulation der Feststoffe und einen Auslass (S) zum Abführen der konditionierten Feststoffe umfasst.

8. Anlage nach Anspruch 7, **dadurch gekennzeichnet, dass** die Konditioniervorrichtung eine im Wesentlichen horizontale Förderzone (202₁), in der die Förderschnecke (204) aufgenommen ist, sowie eine im Wesentlichen vertikale Einlasskammer (202₂) für das Konditioniergases umfasst.

9. Anlage nach Anspruch 7 oder 8, **dadurch gekennzeichnet, dass** Mittel (208) zum Rühren der Feststoffe (10), insbesondere Schaufelblätter (208), mit denen die Förderschnecke (204) ausgerüstet ist, vorgesehen sind.

## Claims

1. Method for the purification of fumes (1) containing acid pollutants consisting of hydrochloric acid and/or sulphur dioxide, in which at a temperature ranging between 110°C and 230°C, preferably between 130°C and 180°C, the fumes to be purified (1) are fed to a gas-solid separator (101), to which a neutralising reagent (2), in particular lime, magnesium, sodium carbonate or sodium bicarbonate, is also fed, a fraction (10) ranging between 40% and 95% of the solid residues (9) discharged from the gas-solid separator (101) is extracted, this fraction (10) of solid residues is conditioned, and at least part of the solids thus conditioned (8) is passed back to the gas-solid separator (101), **characterised in that** the conditioning of the fraction of solid residues consists of the following steps:
• the solids to be conditioned (10) are placed into a reactor (202) comprising an endless screw (204),
• a conditioning gas (7) is admitted within the reactor at a flow rate ranging between 1 and 60 kg/hr, and this conditioning gas is circulated in the reactor in reverse flow to the solids to be conditioned (10),
• the solids are maintained at a temperature ranging between 50 and 200°C, preferably between 80 and 150°C, inside the reactor (202),
• the flow rate of solids and the dimensions of the endless screw are regulated so that the passage time of the solids in contact with the conditioning gas ranges between 30 seconds and 8 minutes, preferably between 1 and 5 minutes, and
• the solids thus conditioned (8) are extracted in order to pass them back to the separator (101).

2. Method according to claim 1, **characterised in that** the solids to be conditioned (10) are inserted into an inlet (E) provided at a first end of the reactor, while the conditioning gas (7) is admitted into an intake chamber (202₂) provided in the vicinity of the opposite end of the reactor.

3. Method according to claim 2, **characterised in that** the conditioning gas (7) is injected into the intake chamber by means of nozzles (210).

4. Method according to any one of the preceding claims, **characterised in that** the conditioning gas (7) is dry air or a mixture of air and steam.

5. Method according to any one of claims 2 to 4, **characterised in that** the conditioned solids (8) are extracted out of the intake chamber by means of an evacuation device (212), in particular a rotary sluice, a sluice or a double flap sluice.

6. Method according to any one of the preceding claims, **characterised in that** the height (h) of solids is maintained at a level ranging between 20 and 70%, preferably between 40 and 55%, of the height (H) of the endless screw.

7. Installation for the purification of fumes for implementing the method according to any one of the preceding claims, comprising:
• means for feeding the fumes to be purified (1);
• a gas-solid separator (101), into which the means for feeding the fumes to be purified open;
• means (2) for admitting a neutralising reagent opening into the separator (101);
• as well as a device for conditioning the solid residues discharged from this separator,
**characterised in that** this conditioning device comprises a reactor (202), an endless screw (204) housed in this reactor, an inlet (E) for the solids to be conditioned, means (210) for admitting a conditioning gas in reverse flow to the circulation of the solids and a discharge outlet (S) for the conditioned solids.

8. Installation according to claim 7, **characterised in that** the conditioning device comprises a substantially horizontal transfer zone (202₁), in which the endless screw (204) is received, and also a substantially vertical intake chamber (202₂) for the conditioning gas.

9. Installation according to claim 7 or 8, **characterised in that** means (208) for agitating the solids (10) are provided, in particular blades (208) equipping the endless screw (204).
